# EUROPÄISCHE PATENTSCHRIFT

(11) **EP 3 390 854 B1**
(45) Veröffentlichungstag und Bekanntmachung des Hinweises auf die Patenterteilung: **08.07.2020**
(21) Anmeldenummer: 16809309.4
(22) Anmeldetag: 29.11.2016
(51) Int. Cl.: F16D 65/00, F16D 65/12

(54) **RUHESTROMBREMSE MIT VERBESSERTER GEGENREIBFLÄCHE AUFGRUND EINER LASERBEARBEITUNG DERSELBEN**
FAIL-SAFE BRAKE HAVING AN IMPROVED MATING FRICTIONAL SURFACE AS A RESULT OF SAID SURFACE BEING LASER-MACHINED
FREIN À COURANT DE REPOS AVEC SURFACE DE FRICTION OPPOSÉE AMÉLIORÉE EN RAISON D'UN TRAITEMENT AU LASER DE CELLE-CI

(30) Priorität: 18.12.2015 DE 102015122200
(43) Veröffentlichungstag der Anmeldung: 24.10.2018
(73) Patentinhaber: Chr. Mayr GmbH + Co. KG, 87665 Mauerstetten (DE)
(72) Erfinder: KEMPF, Philipp, 87600 Kaufbeuren (DE); HUBER, Johann, 87782 Oberegg (DE)
(74) Vertreter: Ruschke, Hans Edvard
(86) Internationale Anmeldenummer: PCT/EP2016/079107
(87) Internationale Veröffentlichungsnummer: WO 2017/102305

(56) Entgegenhaltungen:
- WO-A2-2008/138458
- DE-A1-102012 218 142
- DE-U1- 20 301 729
- JP-A- S59 113 992

## Beschreibung

Die vorliegende Erfindung betrifft die Herstellung von Ruhestrombremsen, bei denen Modifikationen der Oberflächenrauigkeit und der Oberflächenstruktur der mechanischen Gegenreibfläche(n) mittels eines Lasers hergestellt werden, nämlich nach dem Oberbegriff des Hauptanspruchs. Im weiteren Verlauf werden diese Modifikationen als Oberflächenrauigkeit bezeichnet. Diese Verbesserungen der Gegenreibflächen insbesondere an Ruhestrombremsen wie elektromagnetisch lüftenden Federdruckbremsen sind auch bei druckmittelbetätigten Scheibenbremsen oder Permanentmagnetbremsen verwendbar.

Unter Ruhestrombremsen versteht man im Allgemeinen Bremssysteme, welche ohne äußere Energiezufuhr, also beispielsweise im stromlosen Zustand oder in einem Zustand ohne Zufuhr externer Druckmittel ihre Bremswirkung entfalten.

Moderne elektrische Antriebe sind häufig als regelbare Antriebe ausgeführt. Diese übernehmen im Normalbetrieb das komplette Bewegungsprofil einer Anlage. Dies reicht von der Beschleunigung bis hin zu Bremsvorgängen. In den Antriebsstrang integrierte Bremsen übernehmen im Normalbetrieb nur eine Haltefunktion. Lediglich in Notsituationen, bei Stromausfall und bei unkontrollierten Bewegungen wird die Anlage mit Hilfe der Bremsen im Rahmen eines dynamischen Bremsvorgangs bis zum Stillstand abgebremst. Während eines solchen Bremsvorgangs wird Reibarbeit verrichtet.

Oben beschriebene Bremsen sind meist mit organisch gebundenen Reibbelägen auf Bremsrotoren ausgestattet, welche mit metallischen Gegenreibflächen in Kontakt stehen. Solche herkömmlichen Bremssysteme erreichen ihr volles Drehmoment erst nach einem Einschleifvorgang. Dieser wird häufig auch als Einlaufprozess oder als Konditionierung bezeichnet. Der konditionierte und damit optimierte Zustand der Bremse wird erst im Anschluss an ein regelmäßiges Verrichten von Reibarbeit erreicht bzw. aufrecht erhalten.

Beim Einsatz der beschriebenen geregelten Antriebe wird im Normalbetrieb jedoch keine Reibarbeit verrichtet. Auf einen Einschleifvorgang des Bremssystems im Rahmen der Inbetriebnahme einer Anlage wird seitens der Anlagenhersteller oft aus Kostengründen verzichtet. Auch Bremsvorgänge in Folge von Notsituationen oder Stromausfällen kommen nur sehr selten vor, so dass ein konditionierter Zustand von Bremsen nicht aufrecht erhalten bleibt.
Hieraus folgt, dass herkömmliche Bremssysteme ihr volles Drehmoment nicht erreichen.

Wird eine angepasste abrasive Oberflächenrauigkeit im Reibbereich auf Seiten der metallischen Gegenreibfläche bereitgestellt, so kann auf einen Einschleifvorgang sowie auf das Aufrechterhalten des konditionierten Zustands verzichtet werden. Die angepassten Oberflächen führen zu einem oberflächennahen Verkeilen der Reibpartner, dem Reibbelag und der Gegenreibfläche, und somit zu einem erhöhten Reibbeiwert. In Folge des erhöhten Reibbeiwerts ergibt sich ein größeres übertrabares Drehmoment.

Aus dem Stand der Technik sind zahlreiche Modifikationen, Bearbeitungs- und Beschichtungsverfahren metallischer Gegenreibflächen bekannt. So wird in der DE 10 2007 037 612 A1 vorgeschlagen, abrasive Hartstoffkörner in einer Trägermasse auf der Reibfläche einzubetten. Dies führt zwar zu einem erhöhten Reibbeiwert, bedeutet jedoch einen großen Bearbeitungs- und Kostenaufwand.

In der DE 10 2004 049 559 A1 werden Riefen oder Rillenstrukturen auf Gegenreibflächen in Umfangsrichtung vorgeschlagen, wobei die Gegenreibfläche das Nutbild beinhaltet und der Reibbelag mit entsprechenden Federn zu versehen ist. Dies führt zu einem großen Bearbeitungsaufwand an beiden aufeinander anzupassenden Reibpartnern. Darüber hinaus führen Rillen und Nuten in Umfangsrichtung zu einer unwesentlichen Steigerung des Reibbeiwerts. In radialer Richtung sind Ausnehmungen vorgesehen, welche jedoch nicht zur Steigerung der Rauigkeit beitragen sondern nur dem Abtransport des entstehenden Abriebmaterials dienen.

Auch wird beispielsweise in der DE 10 2006 017 207 A1 und der DE 195 24 144 A1 vorgeschlagen, die Oberfläche von Bremsscheiben durch umlaufende Riefen bzw. Ausnehmungen zur besseren Wärmeabgabe zu vergrößern. Diese Oberflächenstruktur führt zwar zu einer erhöhten Oberflächenrauigkeit in radialer Richtung, in Umfangsrichtung (Reibrichtung) ergibt sich jedoch keine abrasive Wirkung. Eine Erhöhung des Reibbeiwerts ist daher nicht zu erwarten.

In der WO 2008/138458 A2 ist eine elektromagnetisch gelüftete Ruhestrombremse offenbart.

In der DE 10 2005 062 522 A1 wird ein Verfahren zur kraftschlüssigen Verbindung der Stirnflächen zweier relativ zueinander stets unbeweglicher Maschinenbauteile zur Übertragung hoher Drehmomente oder Querkräfte offenbart. Zu diesem Zweck wird die Oberfläche eines ersten Maschinenbauteils mittels eines fokussierten Laserstrahls bearbeitet und dabei werden Erhebungen an dieser Oberflächen aufgebracht, die härter sind als das Material auf der Fläche eines anderen Maschinenbauteils, mit dem das erstere verbunden werden soll. Diese Druckschrift befasst sich allerdings nicht mit Bremsen in irgendeiner Form, da die Teile miteinander kraftschlüssig verbunden werden, die auch während des Betriebs relativ zueinander unbewegt bleiben, sodass insbesondere die Arbeitsweise einer Bremse, in der eine Reibfläche und ihre dazu gehörende Gegenreibfläche gegeneinander beweglich sind, nicht von der Druckschrift in Betracht gezogen wird.

In der DE 10 2006 036 151 A1 wird ein Verfahren zur Oberflächenbehandlung eines Werkstückes mit einer tribologisch beanspruchbaren Fläche offenbart. Hierbei wird ein Laser mit einer besonders kurzen Pulsdauer und damit einem geringen Energieübertrag eingesetzt. Hierbei offenbart diese Druckschrift die Entstehung von Taschen mittels Laserbearbeitung und es werden Ultrakurzpulse mit einer Pulsdauer von weniger als 100 ps verwendet. Diese Druckschrift führt vom Wesen der vorliegend beschriebenen Erfindung weg weil aufgrund der Verwendung von ultra-kurzen Laserpulsen Grate oder Erhebungen auf der Oberfläche des zu bearbeitenden Werkstücks nicht entstehen können.

Aufgabe der vorliegenden Erfindung ist es demnach, für eine Ruhestrombremse oder eine vergleichbare Bremse eine deutliche Verbesserung der erreichbaren Reibbeiwerte anzugeben, und zwar bei einer Ruhestrombremse, die einen Bremsrotor mit Reibbelägen aus einem organisch gebundenen Material sowie zumindest eine damit zusammenwirkende Ankerscheibe und ggfs. auch eine Flanschplatte mit Gegenreibfläche(n) aufweist. Die Gegenreibfläche(n) (GF) haben einen Reibbereich (B), in dem erfindungsgemäß unter Verwendung eines Laserstrahls eine abrasive Oberflächen-Rauigkeit erzeugt wird. Die Form der Reibfläche(n) der metallischen Gegenreibfläche(n) kann kreisrund, oval, quadratisch oder rechteckig sein. Durch die Einwirkung des Laserstrahls entstehen Vertiefungen auf der und / oder den Gegenreibfläche(n) (GF) der metallischen Ankerscheibe und / oder der Flanschplatte, wobei gleichzeitig an den Rändern der Vertiefungen Erhebungen / Grate erzeugt werden. Die Vertiefungen und Erhebungen / Grate erzeugen eine in Reibrichtung wirkende erhöhte Oberflächenrauigkeit der Gegenreibfläche(n) (GF), was im Ergebnis zu einem höheren Reibbeiwert der Ruhestrombremse führt. Hierbei ist die Steigerung des Reibbeiwerts unabhängig vom organisch gebundenen Reibbelag auf dem Bremsrotor. Die erfindungsgemäße Verbesserung führt weiterhin zu einem kostengünstigen Verfahren zur Herstellung von abrasiven Oberflächenrauigkeiten auf der oder den Gegenreibfläche(n) (GF) einer Ruhestrombremse oder einer vergleichbaren Bremse. Des Weiteren ermöglicht es die erfindungsgemäße Verbesserung, eine große Anzahl von Ruhestrombremsen mit reproduzierbarer abrasiver Oberflächenrauigkeit herzustellen, und zwar unter Verwendung eines bedienungsfreundlichen und einfachen Verfahrens, also einem zeiteffizienten Verfahren.

Die Erzeugung der abrasiven Oberflächenrauigkeit im Reibbereich (B) der Gegenreibfläche(n) (GF) der Ankerscheibe und ggfs. der Flanschplatte einer Ruhestrombremse wird mittels eines Lasers, beispielsweise eines Neodymdotierten Yttrium-Aluminium-Granat-Lasers oder eines vergleichbar anwendbaren Lasers erbracht. Zur Lösung des technischen Problems sind als Parameter des Lasers die mittlere Leistung des Lasers, die Lage des Fokus des Laserstrahls, die Pulsfrequenz des Lasers, die Markiergeschwindigkeit des Lasers und die Anzahl der Wiederholungen der Laserbearbeitung auf der oder den Gegenreibfläche(n) zu bestimmen. Hierbei wird die Form, Gestalt und Ausdehnung der Gegenreibfläche(n) zusammen mit den zu bearbeitenden Bereichen auf dem vorgenannten Werkstück mittels eines Rechner-gestützten Konstruktionsprogramms, beispielsweise eines CAD-Programms, definiert und dem Laser vorgegeben. Der oder die Bereiche der Gegenreibfläche(n), die eine im Reibbereich (B) abrasive Oberflächenrauigkeit erhalten, können hierbei in regelmäßigen oder unregelmäßigen Abständen voneinander angeordnet sein und in Form von Kreissegmenten, quadratischen oder rechteckigen Segmenten ausgebildet sein. Der Flächenbereich (BR) mit abrasiver Oberflächenrauigkeit, der vom Reibbereich (B) auf der metallischen Reibfläche eingenommen werden kann, liegt im Bereich von 10 % - 80% der metallischen Reibfläche. Das Material bzw. der Werkstoff der zu bearbeitenden Gegenreibfläche (GF) kann wahlweise, C45, C15E, DC01, S235JR, S355J263, X6Cr17 oder ein vergleichbares Material sein.

Bei der Laserbearbeitung des Werkstücks können radiale Linien (quer zur Reibrichtung), die nach außen gerichtet sind, gebildet werden. Die gebildeten Linien können auch in beliebigen anderen Winkeln ausgebildet sein. Alternativ können auch Zick-Zack-Linien, ovale, kreisrunde Linien oder auch Kreuzmuster, gebildet aus Linien mit einem Winkel S zwischen 5 und 90 Winkelgraden zueinander ausgebildet werden. Des Weiteren kann die Oberflächenrauigkeit auch in Form von Beschriftungen ausgeführt werden. Nach Weitergabe aller notwendigen Parameter und Informationen an den Laser wird bei der Anwendung des selbigen auf dem Werkstück das Material der zu bearbeitenden metallischen Scheibe in der Mitte des Laserstrahls aufgrund der hohen Energiedichte des Laserstrahls verdampft bzw. ionisiert, und somit werden Vertiefungen in der Oberfläche des Werkstücks bzw. der Gegenreibfläche(n) erzeugt. Die Erhebungen/Grate an den Rändern der Vertiefungen speisen sich hierbei aus der Schmelze der Laserspur, so dass beim Bearbeiten der metallischen Gegenreibfläche(n) im Mittel ein Materialabtrag stattfindet. Durch die Erzeugung von Graten / Erhebungen bildet sich ein scharfkantiges unregelmäßiges Profil der Gegenreibfläche(n) heraus, wodurch sich beim Zusammenwirken der Gegenreibfläche(n) (GF) mit dem Bremsrotor und dessen Reibfläche(n) mit organischem Belag ein Verkrallen der zusammenwirkenden Oberflächen ergibt.

Hierbei erzeugt der Laser in den (durch das Rechner-gestützte Konstruktionsprogramm) definierten Bereichen in der Gegenreibfläche(n) eine abrasive Oberflächenrauigkeit mit Erhebungen und Vertiefungen, wobei Rauigkeitswerte im Bereich von Rₐ = 1,6 *µ*m bis Rₐ = 4.0 *µ*m erreicht werden. Hierbei entspricht Rₐ dem arithmetischen Mittelwert. Dieser stellt den arithmetischen Mittelwert der absoluten Werte der Profilabweichungen innerhalb der Bezugsstrecke dar. Der Rₐ-Wert wird mittels einer taktilen Rauheitsmessung bestimmt, d.h. durch das sogenannte Tastschrittverfahren. Hierbei wird eine Tastspitze über die Oberfläche gezogen und aus den gewonnenen Fühl-Informationen der Rₐ-Wert errechnet.

Die an den Laser übergebenen Informationen und Parameter, um den oben genannten Bereich der Rauigkeitswerte des Werkstücks zu erhalten, liegen für die mittlere Leistung des Lasers im Bereich von 90 - 100 W, für die Pulsfrequenz des Lasers im Bereich von 20-200 kHz, und für die Markiergeschwindigkeit des Lasers im Bereich von 100 bis 300 mm / s. Die Anzahl der Wiederholungen der Laser-Arbeitsschritte beim Erzeugen der abrasiven Oberflächenrauigkeit auf den Gegenreibfläche(n) ist eins, d.h. die erzeugten Vertiefungen und Erhebungen auf der Gegenreibfläche werden vom Laser während der Bearbeitung des Werkstücks nur einmal überstrichen. Der Fokus des Laserstrahls kann bei der Erzeugung einer abrasiven Oberflächenrauigkeit sowohl direkt auf der Reibfläche der Gegenreibfläche(n) liegen - oder auch in einem Bereich von 0.1 mm - 2.5 mm in bzw. unterhalb der Gegenreibfläche(n). In diesem Fall trifft ein de-fokussierter und damit breiterer Laserstrahl auf die Gegenreibfläche(n), sodass breitere Vertiefungen auf der Oberfläche der Reibfläche entstehen.

Beim beschriebenen Verfahren ist zu bemerken, dass bei anderen verwendeten Parameterbereichen auch Oberflächenstrukturen mit Rauigkeitswerten von bis zu Rₐ = 50 *µ*m erreicht werden können, wobei dies bei der vorliegenden Anwendung der Erfindung nicht erwünscht ist, da im Falle solch hoher Rauigkeitswerte Rₐ der entstehende Verschleiß bei einem Bremsvorgang an einer Ruhestrombremse zu hoch ist.

Bei sich in der Höhe verändernden Werkstücken wird der Fokus des Laserstrahls entsprechend der Höhen-Veränderung des Werkstücks nachgefahren, so dass die Fokuseinstellung bei Bearbeitung eines Werkstücks für verschiedene Höhen des Werkstücks konstant ist. Im Anschluss an die Laserbearbeitung können Oberflächenhärteverfahren wie Gasnitrieren, Plasmanitrieren, Gasnitrocarburieren oder Plasmanitrocarburieren oder ein vergleichbares Verfahren angewendet werden. Hierbei sind die erreichbaren Härtetiefen dieser Verfahren mit ca. 0.5 mm bis 1.0 mm deutlich tiefer als beim vorher angewendeten Laserverfahren. Neben oben genannten Verfahren können auch Laserhärteverfahren oder Randschichthärteverfahren angewendet werden. Durch die ausgeführten Härteverfahren können Rauigkeitsspitzen und auch tieferliegende Linienstrukturen im Anschluss an das Laserverfahren verschleißresistenter gemacht werden.

Zu bearbeitende Werkstücke zum Beispiel metallische Gegenreibfläche(n) von den in Rede stehenden Ruhestrombremsen sind häufig mit Materialien zum Korrosions- und / oder Transportschutz beschichtet, um vor Umwelteinflüssen bei längeren Lagerzeiten geschützt zu sein. Beispiele für solche Beschichtungen können jedwede Art von organischen oder anorganischen Beschichtungen sein, beispielsweise auch Phosphatbeschichtungen, Lackschichten, Metallschichten oder vergleichbare andere Beschichtungen. Zur Vorbereitung für eine weitere Bearbeitung, beispielsweise mit dem oben vorgestellten Verfahren zur Erzeugung einer abrasiven Oberflächenrauigkeit auf Gegenreibfläche(n), ergibt sich das Ziel vorgenannte Beschichtungen aus organischen oder anorganischen Materialien möglichst vollständig zu entfernen, um eine möglichst reine metallische Oberfläche des Werkstücks zu erhalten. Die Entfernung von Beschichtungen aus organischen oder anorganischen Materialien ist neben bekannten Verfahren aus dem Stand der Technik auch mittels eines Lasers möglich. Hierbei arbeitet der Laser in einem Modus, bei dem die Fläche des Werkstücks während des Bearbeitens vom Laserstrahl vollständig überdeckt wird und entweder einmal oder mehrmals überstrichen wird. Hierbei wird der Laser möglichst Randschlüssig und wenig überdeckend betrieben. Die Form und Größe des zu entfernenden Bereichs wird mittels eines Rechner-gestützten Konstruktionsprogramms, beispielsweise eines CAD-Programms oder eines vergleichbaren Programmes, festgelegt und kann aus zusammenhängenden oder voneinander getrennten Bereichen auf der Oberfläche des Werkstücks bestehen. Als Laser kann ein Dioden-gepumpter Faserlaser verwendet werden, beispielsweise ein Neodym-dotierter Yttrium-Aluminium-Granat-Laser. Hierbei sind kreisförmige Segmente oder eine quadratische bzw. rechteckige Form der Bereiche auf der Oberfläche des Werkstücks möglich, von denen eine Beschichtung entfernt wird.

Ein entscheidender Parameter für die Geschwindigkeit der Entfernung von Beschichtungen von der Oberfläche eines Werkstücks ist die Höhe des zu bearbeitenden Werkstücks. Diese ist für die Lage des Fokus des Laserstrahls mit Bezug auf das zu bearbeitende Werkstück entscheidend und wird als Parameter an den Laser übergeben. Hierbei wird von der tatsächlichen Höhe des Werkstücks ein Wert zwischen 0.1 mm bis 2.5 mm abgezogen, sodass der Fokus des Laserstrahls innerhalb des Werkstücks liegt. Aufgrund der dadurch auftretenden De-fokussierung wirkt auf der Oberfläche des Werkstücks ein breiterer Laserstrahl, der zu einer schnelleren Entfernung der Beschichtung des organischen oder anorganischen Materials des Werkstücks führt. Die Parameter des Laserstrahls sind hierbei eine Markiergeschwindigkeit von 1900 - 2000 mm / s in Verbindung mit einer Pulsfrequenz im Bereich von 190-200 kHz und einer mittleren Leistung des Lasers im Bereich von 60 - 80 W. Der Vorteil dieser Parameterwahl liegt bei einer optimierten Arbeitsgeschwindigkeit, sodass so viele Werkstücke wie möglich in bestimmter Zeit bearbeitet werden können. Durch die Bearbeitung des Laserstrahls und der Entfernung von organischen und anorganischen Beschichtungen entstehen bei der Wechselwirkung des Lasers mit dem Werkstück Löcher ohne Grat. Das Profil dieser bearbeiteten Bereiche kann mittels einer taktilen Messung, beispielsweise einer Messnadel, die über die Oberfläche fährt, bestimmt werden. Hierbei ist zu bemerken, dass nahezu keine Erhebungen an den Löchern entstehen, sodass mittels einer taktilen Messung eine erhöhte Rauigkeit messbar ist, diese jedoch aufgrund der fehlenden Erhebungen nicht zu einem erhöhten Reibbeiwert und somit zu einer erhöhten Drehmomentübertragung bei einer Ruhestrombremse führt.

Die Bereiche, die eine abrasive Oberflächenrauigkeit erhalten sollen, überdecken sich bei einer optional vorhergehenden Entfernung einer Beschichtung aus organischen und anorganischen Material in vorher definierten Bereichen des Werkstücks, zumindest zum Teil mit diesen. Hierbei ergibt sich bei Überdeckung der Bereiche der technische Vorteil einer von organischen und anorganischen Materialien nahezu befreiten Oberfläche zur weiteren Bearbeitung. Die genannte Entfernung von Beschichtungen aus organischen oder anorganischen Material kann auch durch andere bekannte Reinigungsverfahren aus dem Stand der Technik erreicht werden.

Weiter ist vorgesehen, nicht den kompletten Reibbereich (B) mit der abrasiven Oberflächenrauigkeit zu versehen, so dass in den in Umfangsrichtung liegenden Bereichen, also zwischen den Bereichen der abrasiven Oberflächenrauigkeit, mittels einer glatten Oberfläche des Werkstücks das Abriebmaterial aus der Reibfuge abgeführt werden kann.

Besonders vorteilhaft zur Erhaltung der abrasiven Oberflächenrauigkeit im Falle eines dynamischen Bremsvorgangs ist es, die Oberfläche des metallischen Reibpartners durch ein Randschichthärteverfahren wie beispielsweise das Induktionshärten zu härten und so den Verschleiß auf der Seite des metallischen Reibpartners zu minimieren.

Wird der metallische Gegenreibpartner nach dem Erzeugen der abrasiven Oberflächenrauigkeit noch mit einer organischen oder anorganisch Beschichtung überzogen, so kann der Gegenreibpartner zusätzlich vor Korrosion geschützt werden. Beispielsweise können hier chemisch abgeschiedene Phosphatschichten oder galvanisch abgeschiedene metallische Schichten aus Zink, Nickel oder Zink-Nickel verwendet werden. Gleichermaßen ist eine keramische Beschichtung möglich.

Der Vorteil der Erfindung gegenüber dem Stand der Technik besteht darin, dass die bewegliche Gegenreibfläche(n) einer Ruhestrombremse mit einer abrasiven Oberflächenrauigkeit zur Steigerung des Reibbeiwerts mit den genannten Verfahren sehr kostengünstig und unabhängig vom Reibbelag eingebracht werden kann. Eine Anpassung der Geometrie des Reibbelags ist nicht notwendig. Ein weiterer Vorteil ist, dass die abrasive Oberflächenrauigkeit reproduzierbar hergestellt werden kann. Zusätzlich kann der Bereich abrasiver Oberflächenrauigkeit durch ein Oberflächenhärteverfahren vor frühzeitigem Verschleiß geschützt werden. Ein weiterer Vorteil der Erfindung ist die Unabhängigkeit von spanenden Verfahren, da bei der Bearbeitung von Werkstücken mit spanenden Werkzeugen ein Verschleiß an letzteren auftritt, was bei der Verwendung eines Laserwerkzeugs nicht zu beobachten ist.

Die Aufgabenstellung der Erfindung wird mit den Merkmalen des Hauptanspruchs und der Nebenansprüche gelöst. Weitere vorteilhafte Details der Erfindung ergeben sich aus den Unteransprüchen sowie aus der Beschreibung der nachstehend genannten Zeichnungen.

Dabei zeigen:
- **Fig. 1**: eine Schnittdarstellung einer elektromagnetisch lüftenden Federdruckbremse in Ruhestrombauweise;
- **Fig. 1.1**: einen metallischen Gegenreibpartner der Bremse aus Fig.1 in runder Bauform;
- **Fig. 2**: eine elektromagnetisch lüftende Federdruckbremse rechteckiger Bauform;
- **Fig. 2.1**: einen metallischen Gegenreibpartner der Bremse aus Fig. 2 in rechteckiger Bauform;
- **Fig. 3**: eine Schnittdarstellung einer hydraulisch lüftenden Federdruckbremse als Scheibenbremse;
- **Fig. 3.1**: eine Bremsscheibe der Scheibenbremse aus Fig. 3;
- **Fig. 4**: einen metallischen Gegenreibpartner der Federdruckbremse aus Fig. 1 mit abrasiver Oberflächenrauigkeit im markierten Bereich;
- **Fig. 5**: eine exemplarische schematische Darstellung einer Oberflächenstruktur analog zu Fig. 4 mit radial verlaufender Struktur;
- **Fig. 6**: eine exemplarische schematische Darstellung einer Oberflächenstruktur analog zu Fig. 5 mit kreuzförmig verlaufender Struktur;
- **Fig. 7**: eine durch das genanntes Laserverfahren erzeugte Rauigkeit auf der Oberfläche eines zu bearbeitenden Werkstücks in Form von zwei radial nach außen laufenden Linien, wobei diese Linien durch Vertiefungen und an den Rändern der Vertiefungen befindlichen Erhebungen /Grate definiert werden;
- **Fig 8.**: ein zwei-dimensionales Profil der abrasiven Oberflächenrauigkeit auf einer Gegenreibfläche (GF) von Fig. 7, wobei die Oberflächenrauigkeit mittels der Bearbeitung durch einen Laser erzeugt wird.
- **Fig. 9:**: Vergleichsmessungen von Ruhestrombremsen mit laserstrukturierten Gegenreibflächen im Vergleich mit Ruhestrombremsen mit gefrästen Gegenreibflächen.

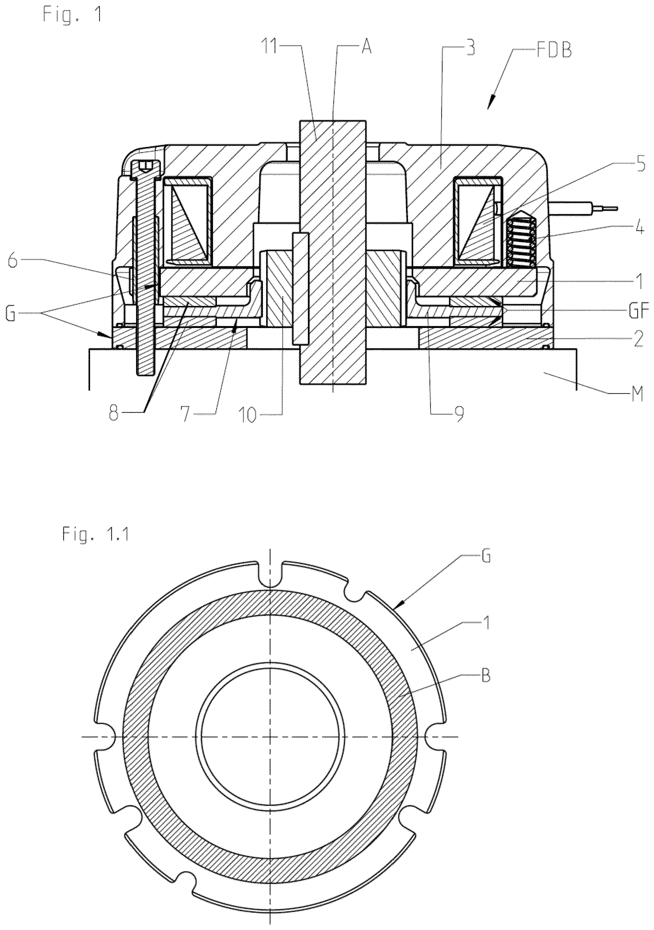

**Fig. 1** zeigt einen Vollschnitt einer elektromagnetisch lüftenden Federdruckbremse (FDB) in Ruhestrombauweise, in der metallische Gegenreibpartner (G) wie die Ankerscheibe (1) und die Flanschplatte (2) verwendet werden, welche die metallischen Gegenreibflächen (GF) bilden. Erfindungsgemäß werden diese Gegenreibflächen (GF) mittels eines Lasers einer abrasiven Oberflächenrauigkeit/ Oberflächenstruktur im jeweiligen Reibbereich der Gegenreibfläche ausgebildet.

Der Spulenträger (3), welcher die Druckfedern (4) sowie die Magnetspule (5) beinhaltet, ist ortsfest am Motorlagerschild (M) angebaut. Die Ankerscheibe (1) ist drehfest über Buchsen (6) geführt und kann sich axial entlang der Drehachse (A) bewegen. Der Rotor (7), welcher aus einem beidseitig mit organischen Reibbelägen (8) verbundenen Reibbelagträger (9) besteht, ist über eine Nabe (10) drehfest mit der Welle (11) verbunden und kann um die Drehachse (A) rotieren und sich axial parallel zur Drehachse bewegen. Die Flanschplatte (2) ist zwischen dem Motorlagerschild (M) und dem Spulenträger (3) fest eingeklemmt.

Die Bremswirkung der Federdruckbremse (FDB) wird durch das Einklemmen des Rotors (7) zwischen der Ankerscheibe (1) und der Flanschplatte (2) erzeugt. Die hierfür benötigte Axialkraft wird durch die Druckfedern (4) aufgebracht. Somit wird über den Rotor (7), welcher über die Nabe (10) drehfest mit der Welle (11) verbunden ist, die Welle (11) festgehalten und an der Rotation um die Drehachse (A) gehindert.

Zum Öffnen der Federdruckbremse (FDB) wird die Magnetspule (5) mit einer elektrischen Stromquelle verbunden. Das dadurch entstehende Magnetfeld zieht die Ankerscheibe (1) entgegen der Kraft der Druckfedern (4) in Richtung zum Spulenträger (3), so dass der Rotor (7) freigegeben und die Bremswirkung aufgehoben wird. Die Welle (11) ist somit wieder frei drehbar.

**Fig. 1.1** zeigt einen metallischen Gegenreibpartner (G) runder Bauform, hier exemplarisch eine Ankerscheibe (1), wie sie in der Federdruckbremse (FDB) aus Fig. 1 verwendet wird. Der hervorgehobene Bereich (B) markiert die Gegenreibfläche (GF), an der der organische Reibbelag (8) des Rotors (7) mit dem metallischen Gegenreibpartner (G) in Kontakt tritt, wenn eine entsprechende Bremse geschlossen wird. Die exemplarisch dargestellte Bauform wird in fast allen Industriebereichen eingesetzt. Die Flanschplatte (2) aus Fig. 1 weist einen gleichen Bereich (B) als Gegenreibfläche (GF) auf, der mit dem zweiten organischen Reibbelag (8) des selben Rotors (7) in Kontakt tritt.

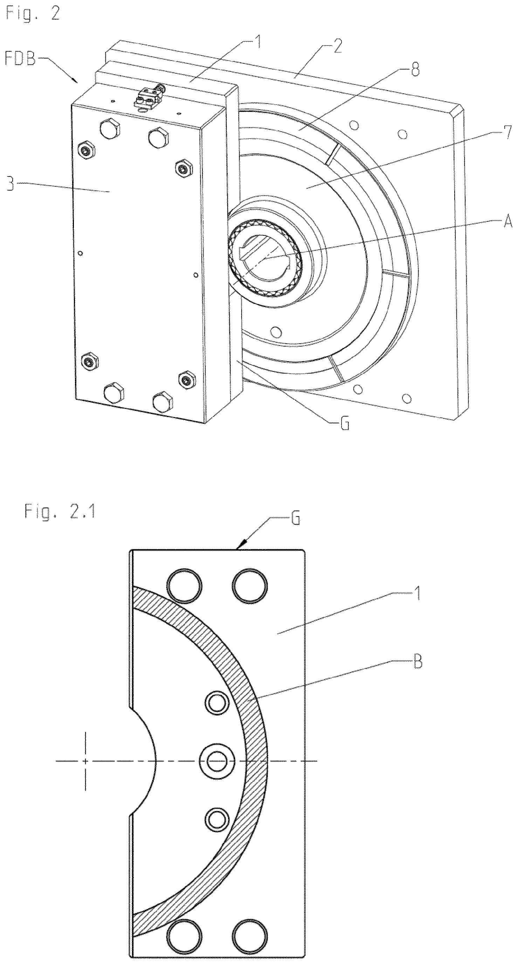

**Fig. 2** zeigt eine Federdruckbremse (FDB) in Ruhestrombauweise in rechteckiger Bauform, wie sie beispielsweise in der Aufzugstechnik eingesetzt wird. Das Funktionsprinzip entspricht der in Fig. 1 beschriebenen Federdruckbremse. Jedoch wirken hier zwei Bremskreise auf einen Rotor (7) ein. Zur besseren Übersicht ist in Fig. 2 nur ein Bremskreis bestehend aus Spulenträger (3) und Ankerscheibe (1) und der Rotor (7) mit dem kreisringförmigen Reibbelag (8) dargestellt.

**Fig. 2****.****1** zeigt einen metallischen Gegenreibpartner (G) in rechteckiger Bauform, hier eine rechteckige Ankerscheibe (1) wie auch in Fig. 2 dargestellt. Der hervorgehobene Bereich (B) markiert die Gegenreibfläche (GF), an der der organische Reibbelag (8) des Rotors (7) mit dem metallischen Gegenreibpartner (G) in Kontakt tritt, wenn eine entsprechende Bremse geschlossen wird. Die dargestellte Bauform wird vor allem im Bereich von Personen- und Lastenaufzügen eingesetzt. Die hier dargestellte Flanschplatte (2) aus Fig. 2 weist wiederum einen ähnlichen Bereich (B) als Gegenreibfläche (GF) auf, der mit dem zweiten organischen Reibbelag (8) des selben Rotors (7) in Kontakt tritt.

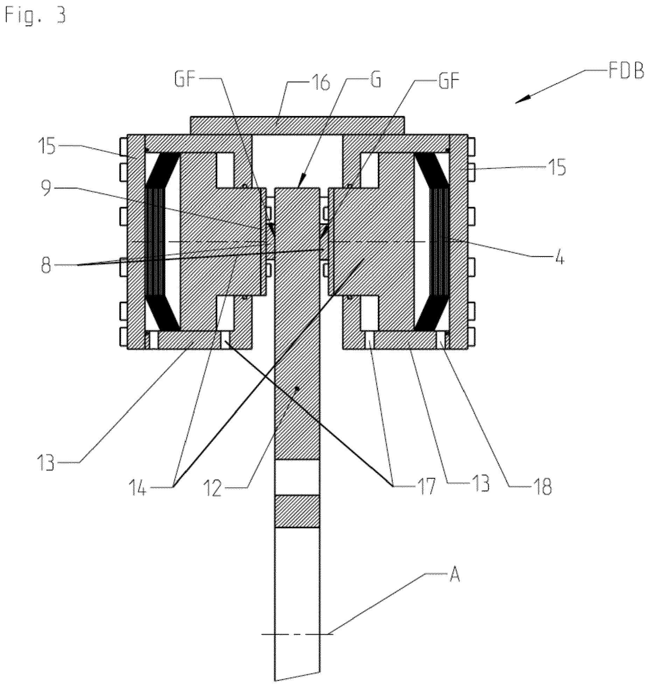

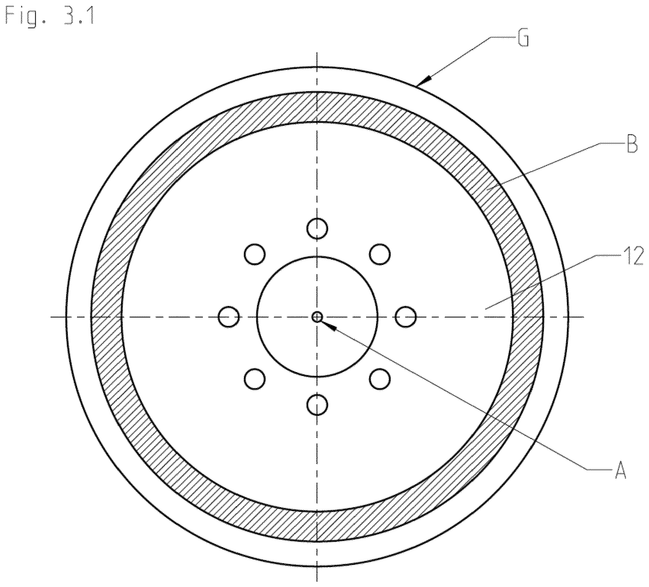

**Fig. 3** zeigt einen Vollschnitt einer hydraulisch lüftenden Federdruckbremse (FDB), hier als Scheibenbremse dargestellt. Die Bremsscheibe (12) mit den metallischen Gegenreibflächen (GF) bildet den metallischen Gegenreibpartner (G). Die Zylinder (13) sind ortsfest angeordnet und über den Bügel (16) steif miteinander verbunden. Über die Axialkraft der Druckfedern (4), welche sich am Zylinderdeckel (15) abstützen, werden die Kolben (14) in Richtung der Bremsscheibe (12) bewegt. Über die mit den Kolben (14) fest verbundenen Reibbelagträger (9) mit den Reibbelägen (8) wird die Bremsscheibe geklemmt und somit die Bremswirkung erzeugt. Zum Öffnen der Federdruckbremse (FDB) wird über die Druckmittelzuführung (17) Druckmittel wie beispielsweise Hydrauliköl oder Druckluft zugeführt, was die Kolben (14) entgegen der Federkraft der Druckfedern (4) in Richtung des Zylinderdeckels (15) bewegt. Hierbei entstehender Überdruck im Bereich der Druckfedern (4) kann über die Entlüftungsbohrungen (18) entweichen. Über diese Bewegung der Kolben (14) wird die Bremsscheibe (12) freigegeben.

**Fig. 3****.****1** zeigt eine metallische Bremsscheibe (12), welche als metallischer Gegenreibpartner (G) dient. Der hervorgehobene Bereich (B) markiert die Gegenreibfläche (GF), an der der organische Reibbelag (8) mit dem metallischen Gegenreibpartner (G) in Kontakt tritt, wenn eine entsprechende Bremse geschlossen wird. Die dargestellte Bauform wird vor allem im Bereich von Personen- und Lastenaufzügen, aber auch im allgemeinen Maschinenbau eingesetzt.

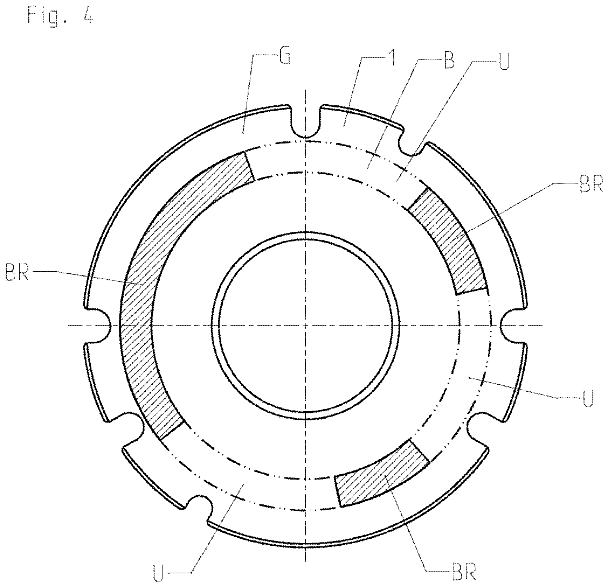

**Fig. 4** zeigt einen metallischen Gegenreibpartner (G), hier eine Ankerscheibe (1), analog zu Fig. 1.1, welche(r) in dem Bereich (B), in dem sich der Reibbelag (8) und der Gegenreibpartner (G) berühren, nicht vollflächig, sondern nur partiell mit einer abrasiven Oberflächenrauigkeit versehen ist. Diese Bereiche (BR) können mehrfach mit Unterbrechungen (U) versehen sein und sich in Umfangsrichtung in regelmäßigen oder in unregelmäßigen Abständen zueinander befinden.

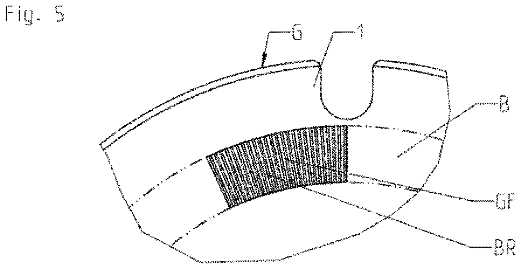

**Fig. 5** zeigt eine Darstellung einer kreissegmentförmigen abrasiven Oberflächenrauigkeit aus Riefen, welche in radial verlaufender Richtung, also quer zur Reibrichtung, ausgebildet sind.

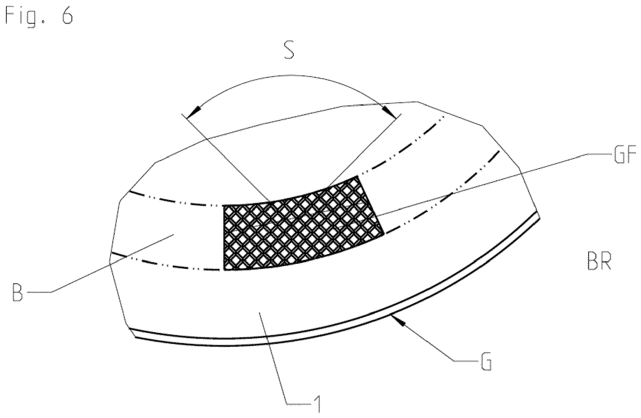

**Fig. 6** zeigt eine Darstellung einer abrasiven Oberflächenrauigkeit, welche durch als Kreuzmuster angeordnete Riefen ausgebildet ist. Die in dem Kreuzmuster angeordneten Riefen überkreuzen sich im dargestellten Beispiel in einem Schnittwinkel (S) von 90°, wobei auch Winkel in einem Bereich zwischen 10° und 90° möglich sind.

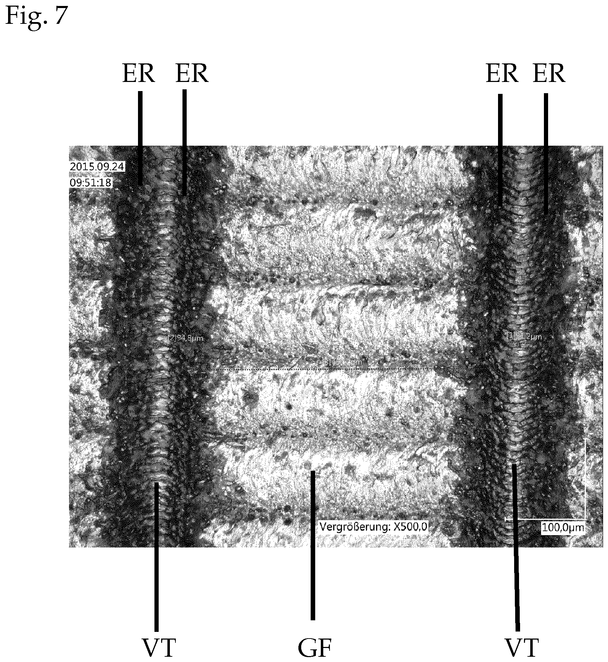

**Fig. 7** zeigt eine mit Hilfe eines optischen Mikroskops aufgenommene und mit dem Faktor 500 vergrößerte Aufnahme eines Teils der abrasiven Oberflächenrauigkeit auf der Oberfläche einer Gegenreibfläche (GF) einer metallischen Scheibe wie einer Ankerscheibe oder Flanschplatte, und zwar in Form von radial nach außen (quer zur Reibrichtung) laufenden Rillen. Hierbei ist zu bemerken, dass die mittels des Lasers erzeugten Vertiefungen am Rand dieser Vertiefungen Erhebungen aufweisen, die zur Erhöhung der Oberflächenrauigkeit beitragen. Die Oberflächenrauigkeit liegt in einem Bereich von Rₐ = 1,6 *µ*m bis Rₐ = 4 *µ*m.

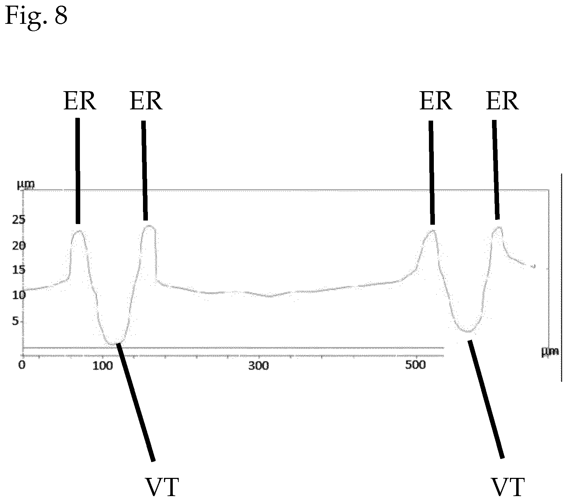

**Fig. 8** zeigt ein Höhenprofil der in Figur 7 aufgenommenen Oberflächenstruktur eines Werkstücks, welches mittels eines Lasers bearbeitet worden ist. Hierbei sind die Erhebungen deutlich zu erkennen, die sich direkt an den Vertiefungen befinden. Mittels dieser Verfahren sind Rauigkeits-Werte im Bereich von Rₐ = 1- 50 *µ*m erreichbar, wobei Werte im Bereich von Rₐ = 1.6 *µ*m bis Rₐ = 4.0 *µ*m bevorzugt sind, da diese zu einen erhöhten Reibbeiwert beitragen und zu einem akzeptablen Verschleiß im Betrieb einer Ruhestrombremse führen.

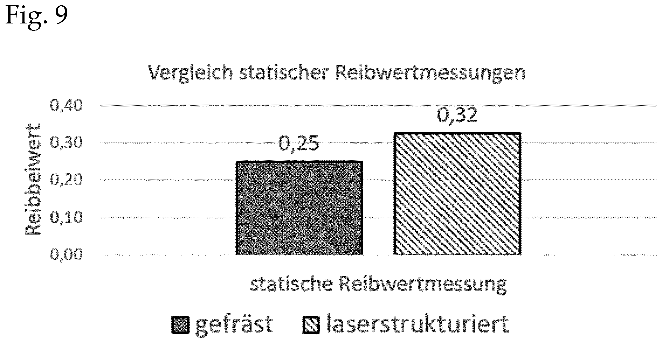

**Fig. 9** zeigt die Ergebnisse von statischen Reibbeiwertmessungen von Ruhestrombremsen, wobei mit dem schraffierten Balken der Reibbeiwert von Gegenreibfläche(n) mit einer Laser-bearbeiteten Oberfläche dargestellt wird und mit dem grauen Balken der Reibbeiwert von Gegenreibfläche(n) mit gefrästen Oberflächen dargestellt wird. Hierbei werden in einem Teststand die durch die bearbeiteten Flächen übertragbaren Drehmomente gemessen und daraus die Reibbeiwerte für die verschieden bearbeiteten Oberflächen bestimmt. Hieraus ergibt sich das Ergebnis, dass die übertragbaren Drehmomente mit Laser-bearbeiteten Gegenreibflächen von metallischen Scheiben in Ruhestrombremsen im Vergleich zu gefrästen Gegenreibfläche(n) von metallischen Scheiben in Ruhestrombremsen im Bereich von 20% - 35% höher sind, womit der technische Vorteil der dargestellten erfindungsgemäßen Lehre gezeigt wird.

### Bezugszeichenliste:

FDB Federdruckbremse
G metallischer Gegenreibpartner
GF metallische Gegenreibfläche
A Drehachse
M Motorlagerschild
B Kontaktfläche zwischen Gegenreibpartner und Reibbelag
BR Bereich abrasiver Oberflächenrauigkeit bzw. abrasiver Oberflächenstruktur
ER Erhebungen /Grate
VT Vertiefungen
U Unterbrechung zwischen den Bereichen BR
S Schnittwinkel
1 Ankerscheibe
2 Flanschplatte
3 Spulenträger
4 Druckfeder
5 Magnetspule
6 Buchse
7 Rotor
8 Reibbelag
9 Reibbelagträger
10 Nabe
11 Welle
12 Bremsscheibe
13 Zylinder
14 Kolben
15 Zylinderdeckel
16 Bügel
17 Druckmittelzuführung
18 Entlüftungsbohrung

## Patentansprüche

1. Elektromagnetisch gelüftete Ruhestrombremse mit einem Spulenträger (3) mit Magnetspule (5) und in dem Spulenträger (3) angeordneten, auf dem Umfang des Spulenträgers (3) verteilten Druckfedern (4), mit:
- einem Bremsrotor (7) mit einer oder mehreren Reibflächen,
- einer Ankerscheibe (1) mit einer oder mehreren metallischen Gegenreibflächen (GF),
- sowie ggfs. einer Flanschplatte mit einer oder mehreren metallischen Gegenreibflächen (GF),
**dadurch gekennzeichnet, dass**
die eine oder mehreren Gegenreibfläche(n) (GF) zumindest in einem Reibbereich (B) mit einer Oberflächenrauigkeit in Form von Vertiefungen (VT) und von an den Rändern der Vertiefungen (VT) angeordneten Erhebungen (ER) versehen werden indem diese Vertiefungen (VT) und Erhebungen (ER) durch Einwirkung eines Laserstrahls im Reibbereich (B) erzeugt werden, und dass diese Bereiche auf der oder den Gegenreibfläche(n) (GF) mit einer Oberflächenrauigkeit im Reibbereich (B) in regelmäßigen oder unregelmäßigen Abständen voneinander getrennt sind, wobei die erzeugte Oberflächenrauigkeit auf der oder den Gegenreibfläche(n) (GF) im Bereich zwischen Rₐ = 1,6 *µ*m bis Rₐ = 4,0 *µ*m liegt.

2. Ruhestrombremse nach Anspruch 1, **dadurch gekennzeichnet, dass** der oder die Gegenreibfläche(n) (GF) eine kreisrunde, ovale, quadratische oder rechteckige Form aufweisen.

3. Ruhestrombremse nach Anspruch 2, **dadurch gekennzeichnet, dass** der oder die Gegenreibfläche(n) (GF) aus einem Eisen- oder Gusswerkstoff wie beispielsweise C45, C15E, DC01, S235JR, S355J2G3, X6Cr17 oder einem vergleichbaren Material bestehen.

4. Ruhestrombremse nach Anspruch 2, **dadurch gekennzeichnet, dass** der oder die Gegenreibfläche(n) (GF) im Reibbereich (B) ein oder mehrere Bereiche mit einer Oberflächenrauigkeit in Form von Kreis-Segmenten, quadratischen oder rechteckigen Segmenten aufweisen.

5. Ruhestrombremse nach Anspruch 3 **dadurch gekennzeichnet, dass** die Bereiche mit Oberflächenrauigkeit im Reibbereich (B) einen Flächenbereich von 10% - 80% der Gegenreibfläche(n) einnehmen.

6. Ruhestrombremse nach einem der vorangegangen Ansprüche, **dadurch gekennzeichnet, dass** Vertiefungen (VT) und Erhebungen (ER) auf der oder den Gegenreibfläche(n) (GF) im wesentlichen in radialen Linien (quer zu Reibrichtung) ausgebildet sind.

7. Ruhestrombremse nach einem der vorangegangen Ansprüche, **dadurch gekennzeichnet, dass** Vertiefungen (VT) und Erhebungen (ER) auf der oder den Gegenreibfläche(n) (GF) als Kreuzmuster mit einem Schnittwinkel (S) ausgebildet sind, wobei der Schnittwinkel (S) einen Wert zwischen 10 und 90 Winkelgrad einnimmt.

8. Ruhestrombremse nach einem der Ansprüche 1 - 7, **dadurch gekennzeichnet, dass** der oder die Gegenreibfläche(n) (GF) nach der Laserbearbeitung durch Oberflächenhärteverfahren wie Gasnitrieren, Plasmanitrieren, Gasnitrocarburieren, Plasmanitrocarburieren oder ein vergleichbares Verfahren gehärtet wird / werden.

9. Ruhestrombremse nach einem der Ansprüche 1 - 8, **dadurch gekennzeichnet, dass** der oder die Gegenreibfläche(n) (GF) nach der Laserbearbeitung mit einer organischen oder anorganischen Beschichtung zum Korrosions- und / oder Transportschutz überzogen wird / werden.

10. Verfahren zum Bearbeiten der Gegenreibfläche(n) (GF) einer elektromagnetisch gelüfteten Ruhestrombremse mit einem Spulenträger (3) mit Magnetspule (5) und in dem Spulenträger (3) angeordneten, auf dem Umfang des Spulenträgers (3) verteilten Druckfedern (4), mit:
- einem Bremsrotor (7) mit einer oder mehreren Reibflächen,
- einer Ankerscheibe (1) mit einer oder mehreren metallischen Gegenreibflächen (GF),
- sowie ggfs. einer Flanschplatte mit einer oder mehreren metallischen Gegenreibflächen (GF),
**dadurch gekennzeichnet, dass**
der oder die Gegenreibfläche(n) in einem Reibbereich (B) mit einer Oberflächenrauigkeit in Form von Vertiefungen (VT) und von an den Rändern der Vertiefungen (VT) angeordneten Erhebungen (ER) versehen werden, indem diese Vertiefungen (VT) und Erhebungen (ER) durch Einwirkung eines Laserstrahls im Reibbereich (B) erzeugt werden, und dass die Bereiche auf der oder den Gegenreibfläche(n) (GF) mit einer Oberflächenrauigkeit im Reibbereich (B) in regelmäßigen oder unregelmäßigen Abständen voneinander getrennt sind, wobei die erzeugte Oberflächenrauigkeit auf der oder den Gegenreibfläche(n) (GF) im Bereich zwischen R. = 1,6 *µ*m bis Rₐ = 4,0 *µ*m liegt.

11. Verfahren nach Anspruch 10, **dadurch gekennzeichnet, dass** der Laser ein Dioden-gepumpter Faserlaser ist, wobei beim Erzeugen der Oberflächenrauigkeit die mittlere Leistung des Lasers im Bereich von 90-100 W, die Pulsfrequenz des Lasers im Bereich von 20-200 kHz und die Markiergeschwindigkeit des Lasers im Bereich von 100 bis 300 mm/sec liegt.

12. Verfahren nach Anspruch 10, **dadurch gekennzeichnet, dass** der Fokus des Laserstrahls im Bereich von 0.1 mm bis 2.5 mm in der oder den Gegenreibfläche(n) (GF) liegt.

13. Verwendung der Gegenreibfläche(n) (GF) nach einem der voranstehenden Ansprüche 10 - 12 zur Verwendung in einer druckmittelbetätigten Scheibenbremse oder einer Permanentmagnetbremse.

14. Verfahren nach Anspruch 10, **dadurch gekennzeichnet, dass** organische oder anorganische Beschichtungen auf der oder den Gegenreibfläche(n) (GF) vor Erzeugung einer Oberflächenrauigkeit zumindest zum Teil entfernt werden indem ein de-fokussierter Laserstrahl die Gegenreibfläche(n) (GF) bearbeitet.

15. Verfahren nach Anspruch 14, **dadurch gekennzeichnet, dass** der Laser ein Dioden-gepumpter Faserlaser ist, wobei bei der Entfernung von Beschichtungen die mittlere Leistung des Laser im Bereich von 60-80 W, die Pulsfrequenz des Lasers im Bereich von 190-200 kHz und die Markiergeschwindigkeit des Lasers im Bereich von 1800 bis 2000 mm / sec liegt.

## Claims

1. Electromagnetically released fail-safe brake having a coil carrier (3) with a magnetic coil (5) and distributed compression springs (4) arranged in the circumference of the coil carrier (3), comprising:
- a brake rotor (7) with one or more friction surfaces,
- an armature disk (1) with one or more metallic opposing friction surfaces (GF),
- and optionally, a flange plate with one or more metallic opposing friction surfaces (GF),
**characterized in that:**
at least in a friction region (B), the one or more opposing friction surface(s) (GF) is provided with a surface roughness in the form of depressions (VT) and elevations (ER) arranged on the edges of the depressions (VT) whereby these depressions (VT) and elevations (ER) are generated by the action of a laser beam on the friction region (B), and that these regions in the friction region (B) on the one or more opposing friction surfaces(s) (GF) having a surface roughness are separated at regular or irregular intervals, wherein the generated surface roughness on the opposing friction surface(s) (GF) lies in the range between Ra = 1.6 µm to Ra = 4.0 µm.

2. Fail-safe brake according to claim 1, **characterized in that** the or the opposing friction surface(s) (GF) have a circular, oval, square or rectangular shape.

3. Fail-safe brake according to claim 2, **characterized in that** the opposing friction surface(s) (GF) comprise an iron or cast material such as C45, C15E, DC01, S235JR, S355J2G3, X6Cr17 or a comparable material.

4. Fail-safe brake according to claim 2, **characterized in that** the opposing friction surface(s) (GF) in the friction region (B) comprise one or more areas having a surface roughness in the form of circular segments, square or rectangular segments.

5. Fail-safe brake according to claim 3, **characterized in that** the areas with surface roughness in the friction region (B) occupy a surface area of 10% - 80% of the opposing friction surface(s).

6. Fail-safe brake according to one of the preceding claims, **characterized in that** depressions (VT) and elevations (ER) on the opposing friction surface(s) (GF) are formed substantially in radial lines (transverse to the friction direction).

7. Fail-safe brake according to one of the preceding claims, **characterized in that** depressions (VT) and elevations (ER) on the or the opposing friction surface(s) (GF) are formed as a criss-cross pattern with a cutting angle (S), wherein the cutting angle (S) has a value between 10 and 90 degrees.

8. Fail-safe brake according to one of claims 1-7, **characterized in that** after laser machining, the opposing friction surface(s) (GF) is hardened by a surface hardening method such as gas nitriding, plasma nitriding, gas nitrocarburizing, plasma nitrocarburizing or a similar such method.

9. Fail-safe brake according to one of claims 1-8, **characterized in that** the opposing friction surface(s) (GF) is coated after the laser machining with an organic or inorganic coating for corrosion and / or transport protection.

10. A method for processing the opposing friction surface(s) (GF) of an electromagnetically released fail-safe brake having a coil carrier (3) with a magnetic coil (5) and distributed arranged compression springs (4) in the circumference of the coil carrier (3), with:
- a brake rotor (7) with one or more friction surfaces,
- an armature disk (1) with one or more metallic opposing friction surfaces (GF),
- and optionally a flange plate with one or more metallic opposing friction surfaces (GF),
**characterized in that**
the opposing friction surface (s) are provided in a friction region (B) with a surface roughness in the form of depressions (VT) and elevations (ER) arranged at the edges of the depressions (VT), in which these depressions (VT) and elevations (ER) are generated by the action of a laser beam in the friction region (B), and that the regions on the opposing friction surface(s) (GF) having a surface roughness in the friction region (B) are separated at regular or irregular intervals, the surface roughness generated on the opposing friction surface(s) (GF) lies in the range between Ra = 1.6 µm to Ra = 4.0 µm.

11. The method according to claim 10, **characterized in that** the laser is a diode-pumped fiber laser, wherein when generating the surface roughness, the average power of the laser is in the range 90 -100 W, the pulse frequency of the laser is in the range 20 - 200 kHz and the marking speed of the laser is in the range 100 to 300 mm / s.

12. The method according to claim 10, **characterized in that** the focus of the laser beam is in the range of 0.1 mm to 2.5 mm in the opposing fiction surface(s) (GF).

13. Use of the opposing friction surface(s) (GF) according to any one of the preceding claims 10 - 12 for use in a fluid-actuated disc brake or a permanent magnet brake.

14. The method according to claim 10, **characterized in that** organic or inorganic coatings on the opposing friction surface(s) (GF) are at least partially removed before generating a surface roughness by working of the opposing friction surface(s) (GF) with a de-focused laser beam.

15. The method according to claim 14, **characterized in that** the laser is a diode-pumped fiber laser, wherein at the removal of coatings, the average power of the laser is in the range of 60 - 80 W, the pulse frequency of the laser is in the range of 190 - 200 kHz and the marking speed of the laser is in the range of 1800 to 2000 mm / s.

## Revendications

1. Frein à courant de repos à desserrage électromagnétique avec un support de bobine (3) avec une bobine d'aimant (5) et des ressorts de compression (4) disposés dans le support de bobine (3) et répartis sur la circonférence du support de bobine (3), avec :
- un rotor de frein (7) avec une ou plusieurs surfaces de friction,
- une plaque d'induit (1) avec une ou plusieurs surfaces de friction opposées métalliques (GF),
- et éventuellement une plaque de bridage avec une ou plusieurs surfaces de friction opposées métalliques (GF),
**caractérisé en ce que**
la ou les surfaces(s) de friction opposée(s) (GF) sont pourvues au moins dans une zone de friction (B) d'une rugosité superficielle en forme de creux (VT) et de reliefs (ER) disposés sur les bords des creux (VT), grâce au fait que ces creux (VT) et reliefs (ER) sont produits par l'action d'un rayon laser dans la zone de friction (B), et
**en ce que** ces zones sur la ou les surface(s) de friction opposée(s) (GF) avec une rugosité superficielle dans la zone de friction (B) sont séparées les unes des autres à intervalles réguliers ou irréguliers, dans lequel la rugosité superficielle produite sur la ou les surface(s) de friction opposée(s) (GF) est située dans la plage entre Rₐ=1,6 µm à Rₐ=4,0 µm.

2. Frein à courant de repos selon la revendication 1, **caractérisé en ce que** la ou les surface(s) de friction opposée(s) (GF) présentent une forme ronde, ovale, carrée ou rectangulaire.

3. Frein à courant de repos selon la revendication 2, **caractérisé en ce que** la ou les surface(s) de friction opposée(s) (GF) se composent d'un matériau de fer ou de fonte comme par exemple C45, C15E, DC01, S235JR, S355J2G3, X6Cr17 ou un matériau comparable.

4. Frein à courant de repos selon la revendication 2, **caractérisé en ce que** la ou les surface(s) de friction opposée(s) (GF) dans la zone de friction (B) présentent une ou plusieurs zones avec une rugosité superficielle en forme de segments de cercle, de segments carrés ou rectangulaires.

5. Frein à courant de repos selon la revendication 3, **caractérisé en ce que** les zones avec une rugosité superficielle dans la zone de friction (B) occupent une zone superficielle de 10 %-80 % de la ou des surface(s) de friction opposée(s) (GF).

6. Frein à courant de repos selon l'une des revendications précédentes, **caractérisé en ce que** les creux (VT) et les reliefs (ER) sur la ou les surface(s) de friction opposée(s) (GF) sont formés sensiblement en lignes radiales (transversalement par rapport à la direction de friction).

7. Frein à courant de repos selon l'une des revendications précédentes, **caractérisé en ce que** les creux (VT) et les reliefs (ER) sur la ou les surface(s) de friction opposée(s) (GF) sont formés comme un motif croisé avec un angle d'intersection (S), dans lequel l'angle d'intersection (S) adopte une valeur entre 10 et 90 degrés.

8. Frein à courant de repos selon l'une des revendications 1 à 7, **caractérisé en ce que** la ou les surface(s) de friction opposée(s) (GF) est/sont trempée(s) après le traitement au laser par des procédés de trempe superficielle comme la nitruration gazeuse, la nitruration plasma, la nitrocarburation gazeuse, la nitrocarburation plasma ou un procédé comparable.

9. Frein à courant de repos selon l'une des revendications 1 à 8, **caractérisé en ce que** la ou les surface(s) de friction opposée(s) (GF) est/sont revêtue(s) après le traitement au laser avec un revêtement organique ou inorganique pour la protection contre la corrosion et/ou la protection de transport.

10. Procédé pour traiter la ou les surface(s) de friction opposée(s) (GF) d'un frein à courant de repos à desserrage électromagnétique avec un support de bobine (3) avec une bobine d'aimant (5) et des ressorts de compression (4) disposés dans le support de bobine (3) et répartis sur la circonférence du support de bobine (3), avec :
- un rotor de frein (7) avec une ou plusieurs surfaces de friction,
- une plaque d'induit (1) avec une ou plusieurs surfaces de friction opposées métalliques (GF),
- et éventuellement une plaque de bridage avec une ou plusieurs surfaces de friction opposées métalliques (GF),
**caractérisé en ce que**
la ou les surfaces(s) de friction opposée(s) (GF) sont pourvues au moins dans une zone de friction (B) d'une rugosité superficielle en forme de creux (VT) et de reliefs (ER) disposés sur les bords des creux (VT), grâce au fait que ces creux (VT) et reliefs (ER) sont produits par l'action d'un rayon laser dans la zone de friction (B), et **en ce que** les zones sur la ou les surface(s) de friction opposée(s) (GF) avec une rugosité superficielle dans la zone de friction (B) sont séparées les unes des autres à intervalles réguliers ou irréguliers, dans lequel la rugosité superficielle produite sur la ou les surface(s) de friction opposée(s) (GF) est située dans la plage entre Rₐ=1,6 µm à Rₐ=4,0 µm.

11. Procédé selon la revendication 10, **caractérisé en ce que** le laser est un laser à fibre pompé par diode, dans lequel lors de la production de la rugosité superficielle, la puissance moyenne du laser est située dans la plage de 90-100 W, la fréquence d'impulsions du laser dans la plage de 20-200 kHz et la vitesse de marquage du laser dans la plage de 100 à 300 mm/s.

12. Procédé selon la revendication 10, **caractérisé en ce que** le point focal du rayon laser est situé dans la plage de 0,1 mm à 2,5 mm dans la ou les surfaces de friction opposée(s) (GF).

13. Utilisation de la (des) surface(s) de friction opposée(s) selon l'une selon l'une des revendications 10-12 précédentes pour utiliser dans un frein à disque actionné par fluide sous pression ou un frein à aimant permanent.

14. Procédé selon la revendication 10, **caractérisé en ce que** des revêtements organiques ou inorganiques sont au moins en partie enlevés sur la ou les surfaces de friction opposée(s) (GF) avant la production d'une rugosité superficielle grâce au fait qu'un rayon laser défocalisé traite la (les) surface(s) de friction opposée(s) (GF).

15. Procédé selon la revendication 14, **caractérisé en ce que** le laser est un laser à fibre pompé par diode, dans lequel lors de l'enlèvement de revêtements, la puissance moyenne du laser est située dans la plage de 60-80 W, la fréquence d'impulsions du laser dans la plage de 190-200 kHz et la vitesse de marquage du laser dans la plage de 1800 à 2000 mm/s.
